# EUROPEAN PATENT APPLICATION

(11) **EP 2 186 391 A1**
(43) Date of publication of application: **19.05.2010**
(21) Application number: 09252618.5
(22) Date of filing: 13.11.2009
(51) Int. Cl.: A01D 34/416

(54) **Adapter for landscape trimmers**

(30) Priority: 14.11.2008 US 271318
(71) Applicant: Techtronic Outdoor Products Technology Limited, Hamilton HM12 (BM)
(72) Inventor: Nolin, Eric, South Carolina 29621 (US); Mueller, Wolf, South Carolina 29681 (US); Wiggins, John Wesley, South Carolina 29697 (US); Morris, John, South Carolina 29625 (US)
(74) Representative: Holmes, Matthew Peter

(57) **Abstract**

An adapter (50) for a landscape trimmer (10A,10B) that includes a string head (40) and an output shaft (25A,25B). The adapter includes an adapter body that has a first end (100) and a second end (105), a string head portion (110), and a trimmer attachment portion (115). The string head portion (110) is positioned proximate the second end (105) and extends axially towards the first end (100). The string head portion (110) is adapted to couple the string head (40) to the adapter body. The trimmer attachment portion (115) is positioned proximate the first end (100), and defines an unthreaded opening that extends axially toward the second end (105) along the adapter body and that is adapted to receive the output shaft therethrough. The trimmer attachment portion further defines a slot (155) that extends at least partially through the adapter body substantially transverse to and in communication with the unthreaded opening.

## Description

### FIELD OF THE INVENTION

The present invention relates to an adapter for a landscape trimmer, and more particularly, an adapter that attaches a string head to different gear heads.

### BACKGROUND

Generally, landscape trimmers are used to cut grass and weeds, and are often used to edge around trees, near fences and walls, and along landscape borders. Conventional landscape trimmers have an elongated shaft with a rotating element or gear head near the end of the elongated shaft, and a spool or string head is attached to the gear bead. Typically, the string head includes a monofilament line or other cutting devices that are rotated by the gear head for cutting and trimming along landscaped areas, fences, and walls.

Some gear heads have an attachment member that is sized or fitted for a particular string bead with an attachment portion that corresponds to the attachment member such that other string heads without corresponding attachment portions cannot be attached to the gear head.

### SUMMARY OF THE INVENTION

According to a first aspect the invention provides an adapter for a landscape trimmer includes a. string head and an output shaft, the adapter including: an adapter body including a first end and a second end; a string head portion positioned proximate the second end and extending axially toward the first end, the string head portion adapted to couple the string head to the adapter body; and a trimmer attachment portion positioned proximate the first end and defining a hollow shaft extending axially toward the second end along the adapter body and adapted to receive the output shaft therethrough, the trimmer attachment portion further defining a slot extending at least partially through the adapter body substantially transverse to and in communication with the hollow shaft.

Preferably the slot is adapted to receive a fastener therethrough to removably couple the output shaft to the adapter.

Preferably the adapter further includes an intermediate portion configured for engaging with the string head.

Preferably the intermediate portion is disposed on the adapter body between the string head portion and the trimmer attachment portion.

Preferably the intermediate portion includes a substantially hexagonal cross-scction for indexing into a bexagonally-shaped recess of the string head.

Preferably the intermediate portion extends an axial distance substantially corresponding to the depth of the recess.

Preferably the string head portion is removably coupled to the intermediate portion.

Preferably the string head portion defines an internally threaded cavity adapted to receive a retainer to secure the string head to the adapter body.

Preferably the slot is adapted to receive a plurality of fasteners, each fastener having a different internal diameter to couple a respective output shaft to the string head.

Preferably the hollow shaft extends axially into the string head portion to accommodate output shafts having different lengths.

Preferably the hollow shaft includes an unthreaded opening.

According to a second aspect the invention provides an landscape trimmer including a gear head including a rotatable output shaft having an external diameter; a string head; an adapter coupled between the gear head and the string head such that rotation of the output shaft is transferred to the string head, the adapter including a string head portion configured for coupling to the string head, a trimmer attachment portion opposite the string head portion and defining a hollow shaft extending axially toward the string head portion and adapted to receive the output shaft therethrough, the trimmer attachment portion further defining a slot extending at least partially through the adapter body substantially transverse to and in communication with the opening, and an intermediate portion disposed between the string head portion and the trimmer attachment portion, the intermediate portion engaged with the string head such that rotation of the adapter is transmitted to the string head; and a fastener having an internal diameter corresponding to the external diameter of the output shaft, the fastener insertable into the slot to couple the output shaft to the adapter.

Preferably the string head defines a recess, and wherein the intermediate portion is defined by a multi-faceted cross-section for indexing into the recess.

Preferably the fastener is a first fastener, and further wherein the first fastener is removable from the slot such that a second fastener having a different internal diameter couples to the adapter to rotatably couple a second gear bead to the string head, the second gear head having a second output shaft with an external diameter different from the external diameter of the first output shaft.

Preferably the string head portion defines an internally threaded cavity extending toward the trimmer attachment portion, the landscape trimmer further including a retainer coupled to the string head within the cavity such that the string head is rotatably secured to the gear head.

Further aspects of the invention will become apparent from the following description and accompanying drawings, which are given by way of example only to illustrate preferred embodiments of the invention.

### BRIEF DESCRIPTION OF THE DRAWINGS

Fig. 1 is an exploded perspective view of a portion of a landscape trimmer according to one construction of the invention and including a first gear head having a first output shaft, an adapter, a string head, and a retainer.
Fig. 2 is an exploded perspective view of a portion of another construction, of a landscape trimmer including a second gear head having a second output shaft, the adapter, the string head, and the retainer.
Fig. 3 is an exploded perspective view of the adapter of Figs. 1 and 2 and an adapter nut portion.
Fig. 4 is a side view of the adapter of Fig. 3.
Fig. 5 is another side view of the adapter of Fig. 3.
Fig. 6 is a section view of the adapter of Fig. 5 taken along line 6-6.
Fig. 7 is a top view of the adapter of Fig. 3.
Fig. 8 is a bottom view of the adapter of Fig. 3.
Fig. 9 is a section view of an adapter for the landscape trimmer of Fig. 1 according to another construction of the invention.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting.

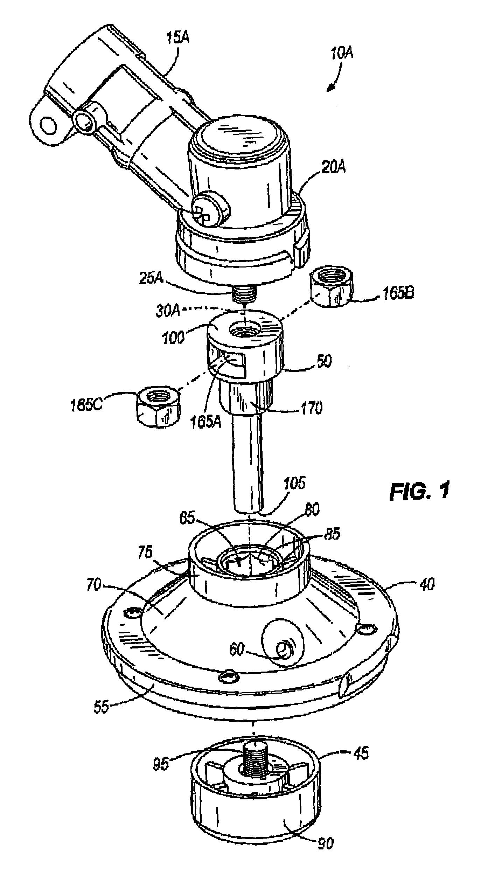

Fig. 1 illustrates a portion of a landscape trimmer 10A including a shaft 15A that houses a drive mechanism (not shown), and a first gear head 20A. The gear head 20A is attached to a free or distal end of the shaft 15A and is rotatably coupled to the drive mechanism. Generally, the drive mechanism is driven by a prime mover (e.g., an engine or a motor) that is positioned adjacent an opposite end of the shaft 15A.

The first gear head 20A includes a first output shaft 25A that is rotatably coupled to the drive mechanism, and that extends outward from the first gear head 20A to define an axis of rotation 30A. As shown in Fig. 1, the first output shaft 25A is substantially cylindrical and has a first external diameter. In the illustrated construction, the first output shaft 25A has a threaded external diameter. In other constructions, the first output shaft 25A may have a substantially or completely unthreaded external diameter.

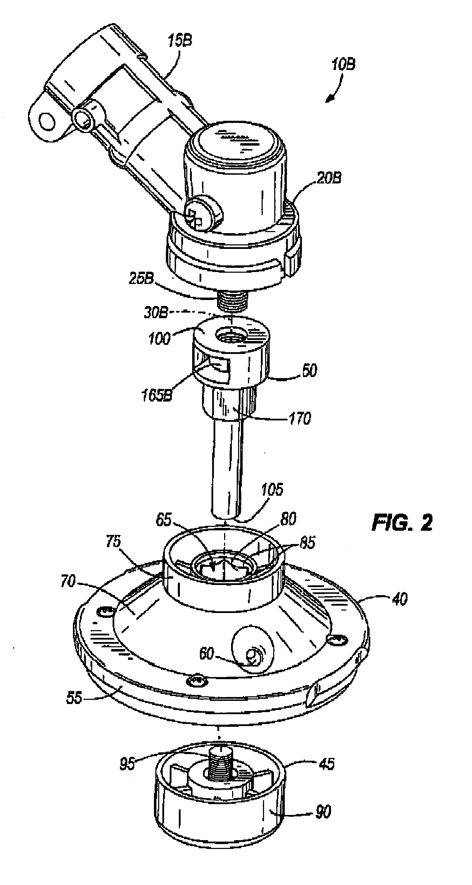

Fig. 2 illustrates a portion of another landscape trimmer 10B including a shaft 15B that houses a drive mechanism, and a second gear head 20B attached to a free or distal end of the shaft 15B and rotatably coupled to the drive mechanism. The drive mechanism described with regard to Fig. 2 is similar to the drive mechanism described with regard to Fig. 1, and will not be discussed in detail.

The second gear head 20B includes a second output shaft 25B rotatably coupled to the drive mechanism, and extending outward from the second gear head 20B to define an axis of rotation 30B. As shown in Fig. 2, the second output shaft 25B is substantially cylindrical and has a second external diameter. In the illustrated construction, the second output shaft 25B has a threaded external diameter. In other constructions, the second output shaft 25B may have a substantially or completely unthreaded external diameter. Referring to Figs. 1 and 2, the second external diameter of the second output shaft 25B is larger than the first external diameter of the first output shaft 25A. Generally, the second output shaft 25B has an external diameter that is different (e.g., smaller or larger) from the external diameter of the first output shaft 25A.

Each of the landscape trimmers 10A, 10B also includes a string head 40, a bump knob or retainer 45, and an adapter 50. The string bead 40 is rotatably coupled to the respective gear head 20A, 20B via the adapter 50, and includes a housing 55 for supporting cutting elements (e.g., monofilament line, rigid blades, etc.). In the illustrated construction, the housing 55 defines holes 60 (one shown) through which monofilament line can extend from within the housing 55.

The housing 55 defines an aperture 65 that axially extends through the housing 55. The housing has a body portion 70 and a connector portion or hub 75, which extends away from the body portion 70 (i.e., upward in Figs. 1 and 2) proximate an end of the housing 55 and surrounds the aperture 65. The body portion 70 supports the cutting elements and is coupled to the retainer 45.

As shown in Figs. 1 and 2, an outer diameter of the connector portion 75 substantially corresponds to an outer diameter of the respective gear head 20A, 20B to substantially completely cover or enclose the adapter 50. The connector portion 75 defines a recess 80 that is proximate an inward or central part of the connector portion 75, and the recess 80 is in communication with the aperture 65. The recess 80 axially extends a predetermined depth into the housing 55, and has a multi-faceted interior surface portion 85. In the illustrated construction, the interior surface portion 85 defines a substantially hexagonally-shaped recess 80. In other constructions, the recess 80 is defined by other multi-faceted shapes (e.g., rectangular, triangular, etc.),

The retainer 45 rotatably secures the string head 40 to the respective gear head 20A, 20B via the adapter 50. Referring to Figs. 1 and 2, the retainer 45 includes a knob portion 90 and a fastener portion 95 that extends axially outward from the knob portion 90 (i.e., upward in Figs. 1 and 2). The knob portion 90 is engageable by a user to selectively attach and detach the retainer 45 relative to the string head 40 such that the string head 40 may be assembled to and disassembled from the gear head 20A and the gear head 20B.

The fastener portion 95 is substantially alignable with and extends into the aperture 65 to engage the adapter 50. Other retainers that rotatably secure the string head 40 to the gear heads 20A, 20B are possible and considered herein.

As shown in Figs, 1 and 2, the adapter 50 is coupled between the gear head 20A, 20B and the string head 40 such that rotation of the respective first and second output shafts 25A, 25B is transferred to the string head 40. The adapter 50 includes an adapter body having a first end 100 and a second end 105 axially spaced apart from the first end 100. The first and second gear heads 20A, 20B are coupled to the adapter 50 at the first end 100, and the string head 40 is coupled to the adapter 50 at the second end 105.

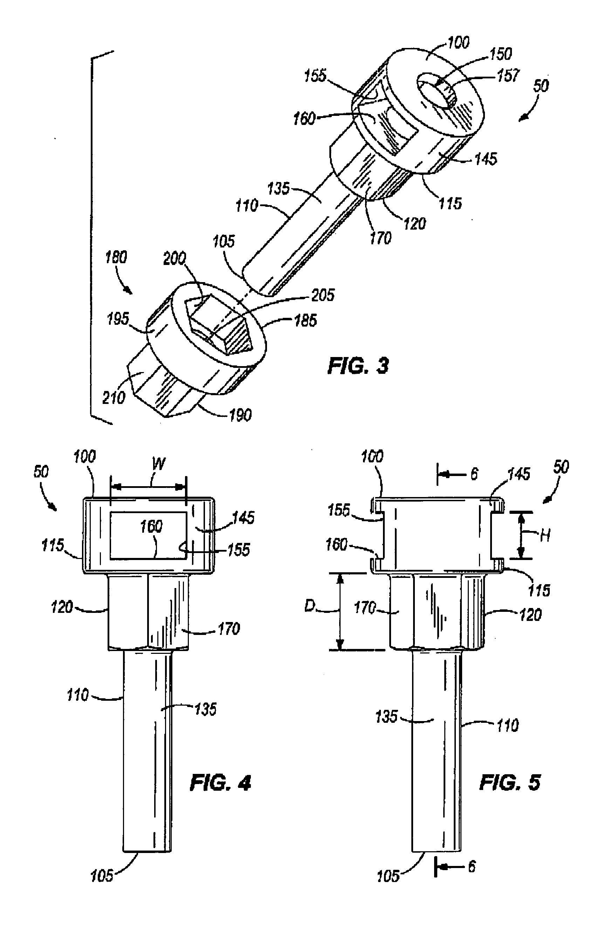

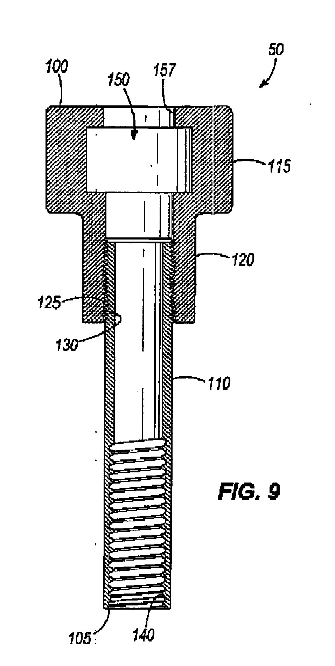

As shown in Fig. 3, the adapter 50 includes a string head portion 110 positioned proximate the second end 105, a trimmer attachment portion 115 positioned proximate the first end 100, and an intermediate portion 120 disposed on the adapter body between the string head portion 110 and the trimmer attachment portion 115. Figs. 1-8 illustrate one construction of the adapter 50 in which the string head portion 110, the trimmer attachment portion 115, and the intermediate portion 120 are formed as a single piece to define a unitary adapter body. Fig. 9 illustrates another construction of the adapter 50 in which the string head portion 110 is removably coupled to the intermediate portion 120. In this construction the string head portion 110 has an externally threaded portion 125 and the intermediate portion 120 has an internally threaded cavity 130 such that the string head portion 110 is thredably coupled within the intermediate portion 120.

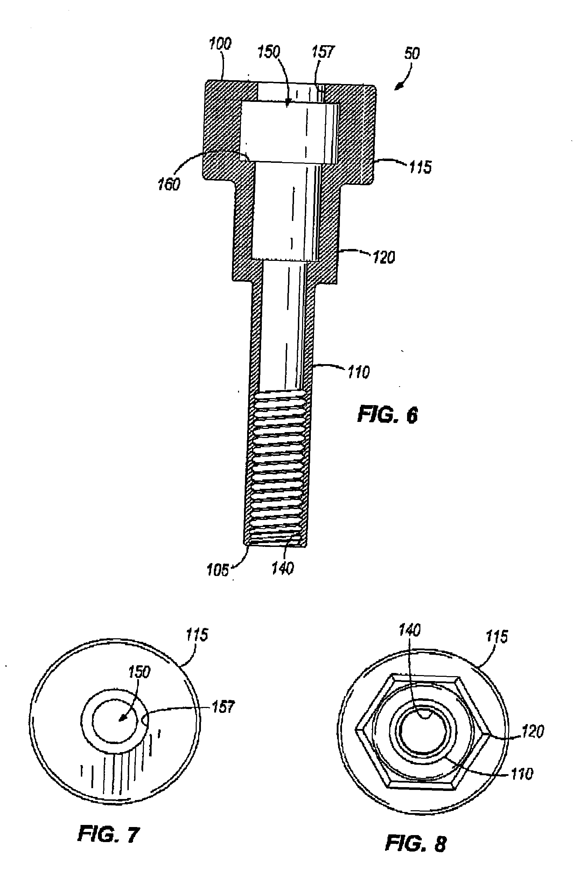

With reference to Figs. 3-6, the string head portion 110 extends axially toward the first end 100 and couples the string head 40 to the adapter 50. The string head portion 110 includes a substantially cylindrical outer surface 135 and defines an internally threaded cavity 140 (Fig. 6) accessible from adjacent the second end 105. The internally threaded cavity 140 extends axially toward the first end 104 of the adapter body to receive the fastener portion 95 of the retainer 45 and secure the string head 40 to the adapter 50.

The trimmer attachment portion 115 of the adapter 50 is positioned opposite the string head portion 110. The trimmer attachment portion 115 includes a generally cylindrical outer contour or surface 145, and defines a hollow shaft 150 and a slot 155. The hollow shaft 150 defines an opening 157 in the trimmer attachment portion 115, and axially extends through the trimmer attachment portion 115 toward the second end 105 along the adapter body. The hollow shaft 150 further extends into the string head portion 110 to accommodate gear head output shafts (e.g., the first and second output shafts 25A, 25B) having different lengths, and intersects with the cavity 140. Referring to Figs. 1 and 2, the hollow shaft 150 is adapted to receive the respective first and second output shafts 25A, 25B. In the illustrated construction, the hollow shaft 150 defines an unthreaded opening 157. In other constructions, the opening 157 may be at least partially threaded.

The slot 155 extends at least partially through the adapter 50 substantially transverse or orthogonal to and in communication with the hollow shaft 150. As shown in Figs. 1-5, the slot 155 extends completely through the adapter body substantially transverse to the respective axis of rotation 30A, 30B. The slot 155 is partially defined by a support surface 160, and has a substantially rectangular cross section with a width W and a height H. As shown in Figs. 3 and 6, the hollow shaft 150 extends through the support surface 160 axially along the adapter body.

As illustrated in Fig. 1, the slot 155 is adapted to receive a plurality of fasteners (e.g., nuts, clamps, pins, etc.) therethrough to removably couple different output shafts (e.g., the first output shaft 25A and the second output shaft 25B) to the adapter 50. In the illustrated construction, the plurality of fasteners includes a first fastener 165A having a first internal diameter, a second fastener 165B having a second internal diameter that is different from the first internal diameter, and a third fastener 165C having a third internal diameter that is different from the first and second internal diameters. Although three different fasteners 165A, 165B, 165C are illustrated in. Fig. 1 and discussed herein, fewer or more than three fasteners (e.g., four or more fasteners) may be used with and selectively inserted into the adapter 50 within the slot 155.

Each of the fasteners 165A, 165B, 165C has an external diameter that is smaller than or substantially the same as the width. W of the slot 155. Each of the fasteners 165A, 165B, 165C also has an internal diameter that corresponds to the external diameter of one output shaft (e.g., output shaft 25A or output shaft 25B) so that the string head 40 can be coupled to the corresponding output shaft via the adapter 50. Generally, the size of the fasteners 165A, 165B, 165C are variable within the dimensions permitted by the width W and the height H of the slot 155. In particular, the external diameter of each fastener 165A, 165B, 165C fits within the width W of the slot 155, and the height of each fastener 165A, 165B, 165C fits within the height H of the slot 155.

The external diameter of each fastener 165A, 165B, 165C may be the same as or different from the external diameter of the remaining fasteners 165A, 165B, 165C. The Internal diameter of each fastener 165A, 165B, 165C is different from the internal diameters of the other fasteners 165A. 165B, 165C to accommodate different output shafts. For example, one of the fasteners 165A, 165B, 165C may include an internal diameter of approximately 12 millimeters. Other fastener sizes are also possible and considered herein. Referring to Figs. 1 and 2, the internal diameters of the first, second and third fasteners 165A, 165B, 165C are threaded to threadably couple to the corresponding output shaft. In other constructions, the fasteners 165A, 165B, 165C may include unthreaded internal diameters (e.g., push nuts, etc.).

Referring to Figs. 1-5 and 8, the intermediate portion 120 is configured for engaging the string head 40, and has a surface 170 that defines a multi-faceted cross-section corresponding to the shape of the recess 80. In the illustrated construction, the intermediate portion 120 includes a substantially hexagonal cross-section for indexing into the hexagonally-shaped recess 80 of the string head 40. The intermediate portion 120 extends an axial distance D along the adapter 50 substantially corresponding to the depth of the recess 80 so that rotation of the adapter 50 is transferred to the string head 40.

Fig. 3 illustrates an adapter member 180 that is engageable with the intermediate portion 120 to accommodate and couple different string heads (e.g., the string head 40) to the adapter 50. The adapter member 180 accommodates string heads that have a relatively short axial height so that the retainer 45 may securely attach the string head 40 to the adapter 50. The adapter member 180 also accommodates a string head having a different-sized recess so that the adapter 50 can couple the associated string head to the corresponding output shaft.

The adapter member 180 includes an adapter engagement portion 185 and a string head engagement portion 190 that axially extends away from the adapter engagement portion 185. The adapter engagement portion 185 has a smooth outer contour or surface 195, an internal recess 200 that axially extends partially through the adapter member 180, and an aperture 205 that communicates with the internal recess 200 and receives the string head portion 110 therethrough. The external diameter of the adapter engagement portion 185 substantially corresponds to the external diameter of the trimmer attachment portion 115 so that the adapter 50 and the adapter member 180 may be substantially enclosed by the respective gear head 20A, 20B and the string head 40. The internal recess 200 has a multi-faceted shape that corresponds to the shape of the intermediate portion 120 so that rotation of the adapter 50 is transferred to the adapter member 180. In the illustrated construction, the internal recess 200 has a substantially hexagonal shape that corresponds to the hexagonal cross section of the intermediate portion 120. Other shapes are possible and considered herein.

The string head engagement portion 190 has an external surface 210, which is defined by a multi-faceted cross section corresponding to the shape of the recess 80 in the string head 40 to transfer rotation of the adapter 50 to the string head 40. In the illustrated construction, the external surface 210 has a substantially hexagonal cross section. The string head engagement portion 190 extends away from the adapter engagement portion 185 an axial distance that corresponds to the depth of the string head recess 80 to substantially engage the string head 40 and to transfer rotation of the adapter 50 to the string head 40.

Referring to Fig. 1, the landscape trimmer 10A is assembled by attaching the string head 40 and the retainer 45 to the adapter 50, and by attaching the adapter 50 to the first gear head 20A. Referring to Fig. 2, the landscape trimmer 10B is assembled by attaching the string head 40 and the retainer 45 to the adapter 50, and by attaching the adapter 50 to the second gear head 20B. The string head 40 is attached to the adapter 50 by inserting the string head portion 110 through the aperture 65 in the housing 55 and indexing the intermediate portion 120 with the string head 40 within the recess 80. In constructions of the adapter 50 that include the removable string head portion 110, the string head portion 110 may be removed from the intermediate portion 120 and replaced with another string head portion for attachment of the adapter 50 to another string head. Alternatively or in addition, the adapter member 180 can be attached to the intermediate portion 120 to accommodate other string heads.

The fastener portion 95 of the retainer 45 is threadably engaged with the internally threaded cavity 140 of the string head portion 110, and the knob portion 90 is engaged to rotatably secure the string head 40 to the adapter 50. For landscape trimmers that have string heads with relatively short axial heights and/or a different-sized recess, the adapter member 180 is engaged with the intermediate portion 120 prior to engaging the string head 40 with the adapter 50.

With reference to Fig. 1, the adapter 50 is attached to or engaged with the output shaft 25A by inserting the fastener 165A into the slot 155 so that the adapter 50 can rotate with the first output shaft 25A. The adapter 50 may be attached to other output shafts (e.g., the output shaft 25B) by inserting corresponding fasteners (e.g., the fastener 165B) into the slot 155. For gear heads having output shafts with external diameters that are different from the external diameters of the output shafts 25A, 25B, other fasteners (e.g., the fastener 165C) may be used to attach the adapter 50 to the corresponding output shaft.

After the fastener 165A is inserted into the slot 155, the output shaft 25A is inserted through the hollow shaft 150 in the trimmer attachment portion 115 into the adapter body. The output shaft 25A is rotatably attached or secured to the adapter 50 by the fastener 165A. In the illustrated construction, the fastener 165A is threadably engaged with the output shaft 25A. In other constructions, the fastener 165A, may be engage with the output shaft 25A by other means (e.g., an interference fit between the fastener 165A, and the output shaft 25A, a clamp connection between the fastener 165A and the output shaft 25A,etc.). In this manner, the string head 40 is rotatably engaged with the corresponding gear head 20A via the adapter 50. Other output shafts, including the output shaft 25B, are coupled to the adapter 50 in a similar manner using the associated fastener (e.g., fastener 165B).

The adapter 50 is a universal adapter that is usable with or interchangeable between gear heads (e.g., the gear heads 20A, 20B) that have output shafts with different external diameters and/or different lengths such that one string head (e.g., the string head 40) can be used with the different gear For example, the string head 40 can be attached to either of the first gear head 20A, the second gear head 20B, or another gear head (not shown) by replacing or out the fastener 165 that is inserted into the trimmer attachment portion 115. To switch the string head 40 from the first gear head 20A to the second gear head 20B, the first fastener 165A is removed from the first output shaft 25A (e.g., the first fastener 165A is unthreaded from the first output shaft 25A), and the first output shaft 25A is removed from the hollow shaft 150. The second fastener 165B is inserted into the slot 155, and the second output shaft 25B is inserted into the hollow shaft 150 partially through the adapter body so that the second output shaft 25B is rotatably secured to the adapter 50 via the second fastener 165B. The string bead 40 can be interchanged between other gear in a similar manner.

The adapter 50 provides a universal interface between the output shafts 25A, 25B of the first and second gear heads 20A, 20B and the string head 40 by receiving a plurality of fasteners that have different internal diameters and external diameters that are smaller than the width W of the slot 155 to allow insertion of the fasteners into the slot 155. The different internal diameters of the fasteners 165 accommodate output shafts (e.g., output shafts 25A, 25B) that have different external diameters. The adapter 50 further provides a universal attachment of the string head 40, or other string heads, to other landscape trimmers that have output shafts with different external diameters so that the string head 40 can be rotatably coupled to the year head 20).

Specific exemplary examples of the invention have been given above. These are not intended to limit the scope of use or functionality of the invention, which may also be embodied by the following variants.

In a first variant example of the invention an adapter for a landscape trimmer includes a string head and an output shaft, the adapter including: an adapter body including a first end and a second end; a string head portion positioned proximate the second end and extending axially toward the first end, the string head portion adapted to couple the string head to the adapter body; and a trimmer attachment portion positioned proximate the first end and defining a hollow shaft extending axially toward the second end along the adapter body and adapted to receive the output shaft therethrough, the trimmer attachment portion further defining a slot extending at least partially through the adapter body substantially transverse to and in communication with the hollow shaft.

The slot may optionally be adapted to receive a fastener therethrough to removably couple the output shaft to the adapter.

The adapter may optionally further include an intermediate portion configured for engaging with the string head.

The intermediate portion may optionally be disposed on the adapter body between the string head portion and the trimmer attachment portion.

The intermediate portion may optionally include a substantially hexagonal cross-section for indexing into a hexagonally-shaped recess of the string head.

The intermediate portion may optionally extend an axial distance substantially corresponding to the depth of the recess.

The string head portion may optionally be removably coupled to the intermediate portion.

The string head portion may optionally define an internally threaded cavity adapted to receive a retainer to secure the string head to the adapter body.

The slot may optionally be adapted to receive a plurality of fasteners, each fastener having a different internal diameter to couple a respective output shaft to the string head.

The hollow shaft may optionally extend axially into the string head portion to accommodate output shafts having different lengths.

The hollow shaft may optionally include an unthreaded opening.

In a second variant example of the invention an adapter for a landscape trimmer includes a string head and an output shaft having an external diameter the adapter including: an adapter body including a first end and a second end; a string head portion positioned proximate the second end and extending axially toward the first end, the string head portion adapted to couple the string head to the adapter body; an intermediate portion positioned proximate the string head portion between the first end and the second end, the intermediate portion configured for engaging with the string head; and a trimmer attachment portion positioned proximate the first end, the trimmer attachment portion defining a hollow shaft extending toward the second end along the adapter body and adapted to receive the output shaft therethrough, the trimmer attachment portion further defining a slot extending at least partially through the adapter body substantially transverse to and in communication with the hollow shaft, the slot adapted to receive a plurality of fasteners therethrough the plurality of fasteners including a first fastener having a first internal diameter and a second fastener having a second internal diameter that is different from the first internal diameter to removably couple different output shafts to the adapter.

The intermediate portion may optionally include a multi-faceted cross-section configured for indexing into a recess of the string head.

The intermediate portion may optionally include a hexagonal cross-section configured for indexing into a hexagonally-shaped recess of the string bead.

The intermediate portion may optionally extend an axial distance toward the second end of the adapter body substantially corresponding to the depth of the recess.

The intermediate portion may optionally be disposed between the string head portion and the trimmer attachment portion.

The string head portion may optionally be removably coupled to the intermediate portion.

The string bead portion may optionally define an internally threaded cavity adapted to receive a retainer to secure the string head to the adapter body.

The hollow shaft may optionally extend axially into the string head portion to accommodate output shafts having different lengths.

The hollow shaft may optionally include an unthreaded opening.

In a third variant example of the invention the an adapter is on an landscape trimmer including a gear head including a rotatable output shaft having an external diameter; a string head; an adapter coupled between the gear head and the string head such that rotation of the output shaft is transferred to the string head, the adapter including a string head portion configured for coupling to the string head, a trimmer attachment portion opposite the string head portion and defining a hollow shaft extending axially toward the string head portion and adapted to receive the output shaft therethrough, the trimmer attachment portion further defining a slot extending at least partially through the adapter body substantially transverse to and in communication with the opening, and an intermediate portion disposed between the string head portion and the trimmer attachment portion, the intermediate portion engaged with the string head such that rotation of the adapter is transmitted to the string head; and a fastener having an internal diameter corresponding to the external diameter of the output shaft, the fastener insertable into the slot to couple the output shaft to the adapter.

The string head may optionally define a recess, and wherein the intermediate portion is defined by a multi-faceted cross-section for indexing into the recess.

The recess may optionally have a hexagonal shape, and wherein the intermediate portion includes a hexagonal cross-section for indexing into the hexagonally-shaped recess.

The intermediate portion may optionally extend an axial distance toward the string head portion substantially corresponding to the depth of the recess.

The fastener may optionally be a first fastener, and further wherein the first fastener is removable from the slot such that a second fastener having a different internal diameter couples to the adapter to rotatably couple a second gear head to the string head, the second gear head having a second output shaft with an external diameter different from the external diameter of the first output shaft.

The string head portion may optionally be removably coupled to the intermediate portion.

The string head portion may optionally define an internally threaded cavity extending toward the trimmer attachment portion, the landscape trimmer further including a retainer coupled to the string head within the cavity such that the string head is rotatably secured to the gear head.

The hollow shaft may optionally extend axially into the string head portion to accommodate output shafts having different lengths.

The hollow shaft may optionally include an unthreaded opening.

## Claims

1. An adapter for a landscape trimmer including a string head and an output shaft, the adapter including:
an adapter body including a first end and a second end;
a string head portion positioned proximate the second end and extending axially toward the first end, the string head portion adapted to couple the string head to the adapter body; and
a trimmer attachment portion positioned proximate the first end and defining a hollow shaft extending axially toward the second end along the adapter body and adapted to receive the output shaft therethrough, the trimmer attachment portion further defining a slot extending at least partially through the adapter body substantially transverse to and in communication with the hollow shaft.

2. The adapter of claim 1 wherein the slot is adapted to receive a fastener therethrough to removably couple the output shaft to the adapter.

3. The adapter of claims 1 or 2, further including an intermediate portion configure for engaging with the string head.

4. The adapter of claim 3 wherein the intermediate portion is disposed on the adapter body between the string head portion and the trimmer attachment portion.

5. The adapter of claim 3, wherein the intermediate portion includes a substantially hexagonal cross-section for indexing into a hexagonally-shaped recess of the string head.

6. The adapter of claim 5, wherein the intermediate portion extends an axial distance substantially corresponding to the depth of the recess.

7. The adapter of claim 3, wherein the string head portion is removably coupled to the intermediate portion.

8. The adapter of any preceding claim, wherein the string head portion defines an internally threaded cavity adapted to receive a retainer to secure the string head to the adapter body.

9. The adapter of any preceding claim, wherein the slot is adapted to receive a plurality of fasteners, each fastener having a different internal diameter to couple a respective output shaft to the string head.

10. The adapter of any preceding claim, wherein the hollow shaft extends axially into the string head portion to accommodate output shafts having different lengths.

11. The adapter of any preceding claim, wherein the hollow shaft includes an unthreaded opening.

12. A landscape trimmer including:
a gear head including a rotatable output shaft having an external diameter,
a string head;
an adapter coupled between the gear head and the string head such that rotation of the output shaft is transferred to the string head, the adapter including
a string head portion configured for coupling to the string head,
a trimmer attachment portion opposite the string head portion and defining a hollow shaft extending axially toward the string head portion and adapted to receive the output shaft therethrough, the trimmer attachment portion further defining a slot expending at least partially through the adapter body substantially transverse to and in communication with the opening, and
an intermediate portion disposed between the string head portion and the trimmer attachment portion, the intermediate portion engaged with the string head such that rotation of the adapter is transmitted to the storing head; and
a fastener having an internal diameter corresponding to the external diameter of the output shaft, the fastener insertable into the slot to couple the output shaft to the adapter.

13. The landscape trimmer of claim 12, wherein the string head defines a recess, and wherein the intermediate portion is defined by a multi faceted cross-section for indexing into the recess.

14. The landscape trimmed of claims 12 or 13, wherein the fastener is a first fastener, and further wherein the first fastener is removable from the slot such that a second fastener having a different internal diameter couples to the adapter to rotatably couple a second gear head to the string head, the second gear head having a second output shaft with an external diameter different from the external diameter of the first output shaft.

15. The landscape trimmer of any one of claims 12 to 14, wherein the string head portion defines an internally threaded cavity extending toward the trimmer attachment portion, the landscape trimmer further including a retainer coupled to the string head within the cavity such that the string head is rotatably secured to the gear head.
